# EUROPÄISCHE PATENTANMELDUNG

(11) **EP 0 785 113 A1**
(43) Veröffentlichungstag der Anmeldung: **23.07.1997**
(21) Anmeldenummer: 97100705.9
(22) Anmeldetag: 17.01.1997
(51) Int. Cl.: B60R 22/18, B60R 22/46

(54) **Vorrichtung zum Straffen mehrerer in einem Kraftfahrzeug angeordneter Sicherheitsgurte**

(30) Priorität: 17.01.1996 DE 29600777 U
(71) Anmelder: HS Technik und Design Technische Entwicklungen GmbH, 82234 Wessling (DE)
(72) Erfinder: Specht, Martin, Dipl.-Ing. (FH), 82340 Feldafing (DE)
(74) Vertreter: Nöth, Heinz, Dipl.-Phys.

(57) **Zusammenfassung**

Vorrichtung zum Straffen mehrerer in einem Kraftfahrzeug in einer quer zur Fahrzeuglängsrichtung verlaufenden Reihe, insbesondere an der Rückbank angeordneter Sicherheitsgurte, die jeweils in einem Verschluß verriegelbar sind, wobei die mehreren Verschlüsse 1, 2, 3 von wenigstens einem Strafferantrieb 6 in eine zurückgezogene Stellung bewegbar sind.

## Beschreibung

Die Erfindung betrifft eine Vorrichtung zum Straffen mehrerer in einem Kraftfahrzeug angeordneter Sicherheitsgurte, die jeweils in einem Verschluß verriegelbar sind.

Bei einem Dreipunktsicherheitsgurt werden das Schulter- und Beckengurtband mit Hilfe einer Einsteckzunge in bekannter Weise im Verschluß verriegelt. Der Verschluß jedes Sicherheitsgurtes ist fest mit einem Bodenteil der Karosserie oder mit dem Fahrzeugsitz verbunden. Es ist bekannt (EP 0 644 089 A1) einen Strafferantrieb über ein Zugmittel mit dem Verschluß zu verbinden und den Sicherheitsgurt dadurch zu straffen, daß das vom Strafferantrieb angetriebene Zugmittel den Verschluß in eine zurückgezogene Stellung bringt.

Aufgabe der Erfindung ist es, eine Vorrichtung zum gegebenenfalls gleichzeitigen Straffen mehrerer Sicherheitsgurte in einem Kraftfahrzeug zu schaffen.

Diese Aufgabe wird erfindungsgemäß dadurch gelöst, daß mehrere Verschlüsse, die in einer quer zur Fahrzeuglängsrichtung verlaufenden Reihe im Fahrzeug angeordnet sind, von wenigstens einem Strafferantrieb in eine zurückgezogene Stellung bewegbar sind.

Als Strammelement kann ein gemeinsames Zugmittel, insbesondere Zugseil, zur Anwendung komen, das mit Hilfe eines Linearstrafferantriebs, der beispielsweise aus der EP 0 644 089 A1 bekannt ist, angetrieben wird. Mit dem gemeinsamen Zugmittel, insbesondere in Form eines Zugseiles, sind über Umlenkstellen umgelenkte Einzelzugseile mit den jeweiligen Verschlüssen verbunden.

Ein weiteres Ausführungsbeispiel für ein gemeinsames Strammelement ist als drehbare Welle ausgebildet. Die drehbare Welle kann von einem oder mehreren Strafferantrieben angetrieben werden. Bevorzugt wird ein mit der Welle direkt oder über eine Kupplung koppelbarer Drehantrieb verwendet. Derartige Drehantriebe sind beispielsweise aus dem deutschen Patent 43 31 723, der DE 43 42 666 A1, der EP 0 648 652 A1, der EP 0 629 531 A1 oder der DE 44 22 980 A1 bekannt. Es ist auch möglich, anstelle eines Drehantriebs einen Line-arantrieb, welcher einen beispielsweise pyrotechnisch in einem Zylinder angetriebenen und mit einem Zugseil verbundenen Kolben aufweist, zu verwenden. Das Zugseil wirkt über eine eine Seilscheibe aufweisende Kupplung (z.B. EP 0 529 265 B1) auf die Welle. Das gemeinsame Strammelement, insbesondere die gemeinsame Welle, ist bevorzugt am Boden der Fahrzeugkarosserie so gelagert, daß die bei einem Unfall (Crash) auftretenden Kräfte aufgenommen werden können.

Es ist auch möglich, für jeden Verschluß einen zugeordneten Strafferantrieb vorzusehen, der über ein geeignetes Strammelement direkt auf den Verschluß wirkt.

Ferner kann auf das gemeinsame oder das jeweilige dem Verschluß zugeordnete Strammelement eine Rücklaufsperre nach dem Strammvorgang wirken. Diese Rücklaufsperre kann in Form einer Klinke ausgebildet sein, welche in eine fest mit der Welle verbundene Verzahnung eingreift. Bei der Ausbildung des gemeinsamen Strammelementes in Form eines Zugmittels kann die Rücklaufsperre am Antriebskolben des Linearstrafferantriebs vorgesehen sein, wie es aus der EP 0 644 089 A1 bekannt ist.

Zwischen den Gurtbändern, über welche die jeweiligen Verschlüsse mit der gemeinsamen bzw. zentralen Welle verbunden sind, können drehmomentbegrenzende Kupplungen angeordnet sein, um individuelle Rückzugskräfte in Abhängigkeit von unterschiedlichen Körpergrößen der Fahrzeuginsassen zu haben.

Anhand der Figuren wird an Ausführungsbeispielen die Erfindung noch näher erläutert. Es zeigt:
- Fig. 1:: in perspektivischer Darstellung ein erstes Ausführungsbeispiel;
- Fig. 2:: in perspektivischer Darstellung ein zweites Ausführungsbeispiel;
- Fig. 3:: eine teilweise schnittbildliche Darstellung des in der Fig. 1 dargestellten Ausführungsbeispiels;
- Fig. 4:: einen Ausschnitt aus dem in Fig. 3 dargestellten Ausführungsbeispiel;
- Fig. 5:: ein Ausführungsbeispiel für eine Rücklaufsperre, welche bei dem in den Figuren 1, 3 und 4 dargestellten Ausführungsbeispiel zur Anwendung kommen kann;
- Fig. 6:: eine schnittbildliche Darstellung einer beim Ausführungsbeispiel der Figuren 1, 3 und 4 verwendeten Welle;
- Fig. 7:: ein Ausführungsbeispiel für eine Verankerung eines mit einem Verschluß verbundenen Gurtbandes mit der in Fig. 6 dargestellten Welle;
- Fig. 8:: eine Anordnung von Verschlüssen an einer Rückbank eines Kraftfahrzeugs mit jeweils zugeordneten Strafferantrieben;
- Fig. 9:: eine weitere Anordnung von Verschlüssen mit zugeordneten Strafferantrieben für eine Rückbank eines Kraftfahrzeuges;
- Fig. 10:: eine weitere Anordnung von Verschlüssen einer Rückbank eines Kraftfahrzeuges mit zugeordneten Strafferantrieben;
- Fig. 11:: ein Ausführungsbeispiel für einen Strafferantrieb; und
- Fig. 12:: ein weiteres Ausführungsbeispiel für einen gemeinsamen Strafferantrieb, der über Drehmoment begrenzende Kupplungen auf die Verschlüsse wirkt.

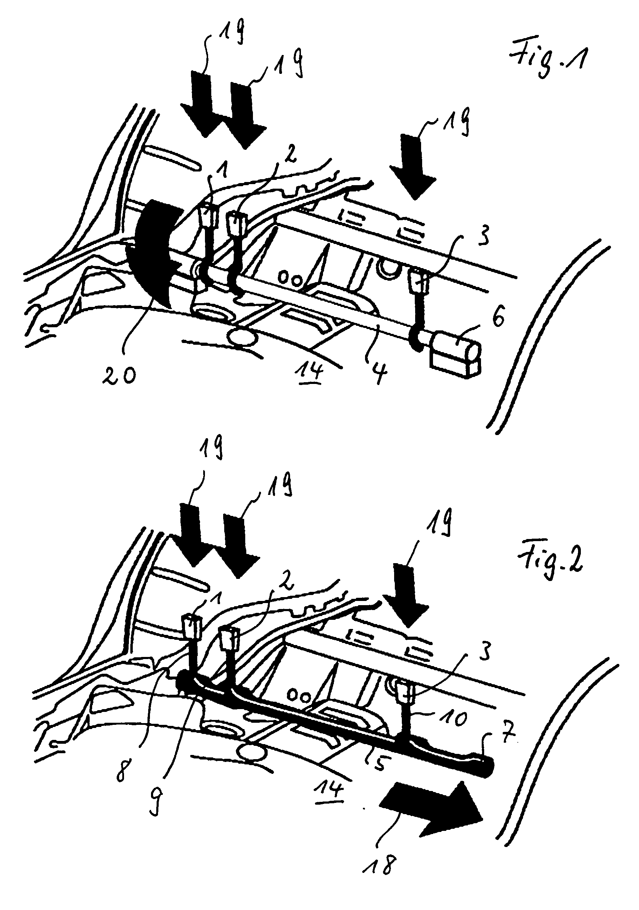

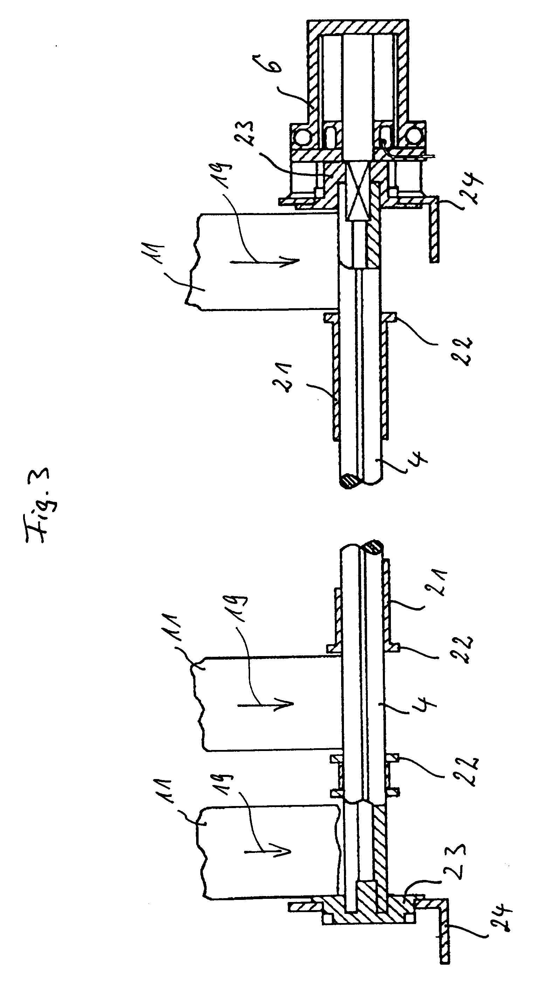

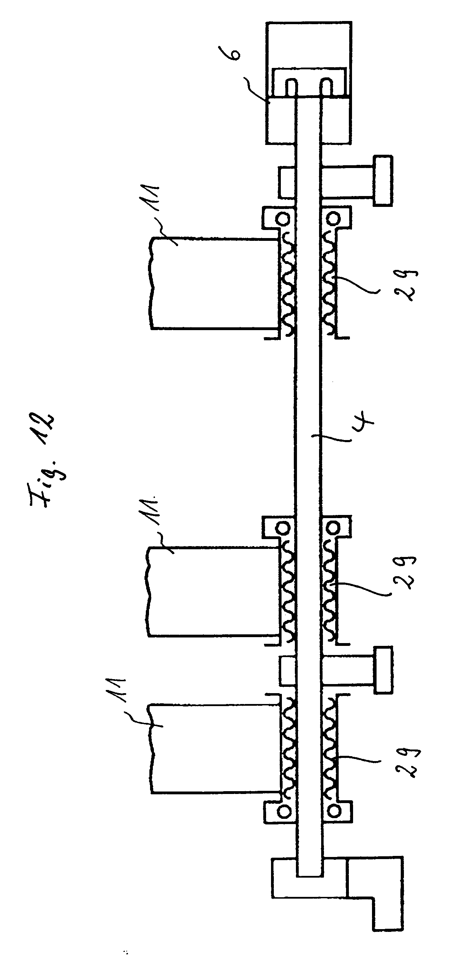

Bei den in den Figuren 1 und 2 dargestellten Ausführungsbeispielen sind Verschlüsse 1,2,3 für Sicherheitsgurte einer Rückbank in einem Kraftfahrzeug mit einem gemeinsamen Strammelement, welches von einem Strafferantrieb angetrieben wird, verbunden. Bei dem in Fig. 1 dargestellten Ausführungsbeispiel wird das gemeinsame zentrale Strammelement von einer Welle 4 gebildet und bei dem in Fig. 2 dargestellten Ausführungsbeispiel von einer gemeinsamen Zugeinrichtung 5. In beiden Ausführungsbeispielen ist das gemeinsame Strammelement (die Welle 4 bzw. die gemeinsame Zugeinrichtung 5) im Boden 14 bzw. der Bodengruppe eines Kraftfahrzeugaufbaus verankert, so daß an den Sicherheitsgurten wirksam werdende Kräfte, insbesondere bei einem Unfallgeschehen, sicher aufgenommen werden. Bei dem in der Fig. 2 dargestellten Ausführungsbeispiel erfolgt der Antrieb der gemeinsamen Zugeinrichtung 5 mit Hilfe eines Linearstraffers, bei welchem in einem Zylinder 30 ein Kolben 31, beispielsweise pyrotechnisch, angetrieben wird (Fig. 11). Dieser Antrieb kann so ausgebildet sein, wie es in der EP 0 644 089 beschrieben ist oder in der Fig. 11 gezeigt ist. Die Zugeinrichtung 5 kann ein gemeinsame Zugseil aufweisen, das über an Umlenkstellen umgelenkte Verbindungsmittel 8, 9, 10, z.B. Stahlseile, mit den jeweiligen Verschlüssen 1, 2 und 3 verbunden ist. Beim Antrieb der gemeinsamen Zugeinrichtung 5 in Richtung eines Pfeiles 18 mit Hilfe des Strafferantriebes 7 werden die Verschlüsse 1, 2 und 3 in zurückgezogene Stellungen bewegt, wobei die in den Verschlüssen 1, 2 und 3 verriegelten Sicherheitsgurte an den Körpern der Insassen straff gezogen werden (Pfeile 19). Die gemeinsame Zugeinrichtung 5 und der Strafferantrieb 7 können auch in der Weise ausgebildet sein, daß mehrere Kolben mit mehreren Zugseilen auf die Verschlüsse 1, 2 und 3 wirken. Eine derartige Straffereinrichtung mit entsprechend ausgebildeter Zugeinrichtung ist beispielsweise in der deutschen Patentanmeldung 196 41 224.2 beschrieben.

Bei dem in Fig. 1 dargestellten Ausführungsbeispiel wird zum Bewegen der Verschlüsse 1, 2 und 3 in die zurückgezogenen Positionen (Pfeile 19) die Welle 4 mit Hilfe eines als Drehantrieb ausgebildeten Strafferantriebs 6 gedreht (Pfeil 20). Geeignete Drehantriebe sind bekannt (DE 43 31 723 C2, EP 0 846 652 A1, EP 0 629 531 A1).

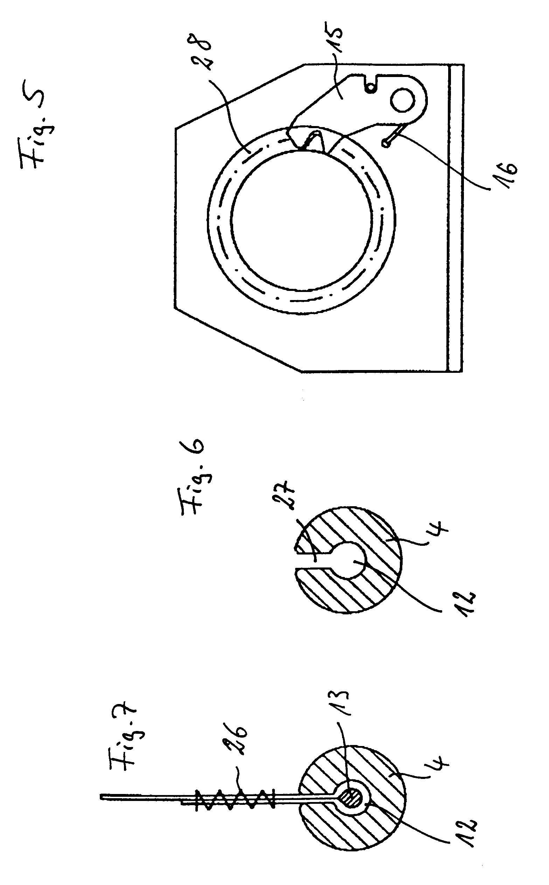

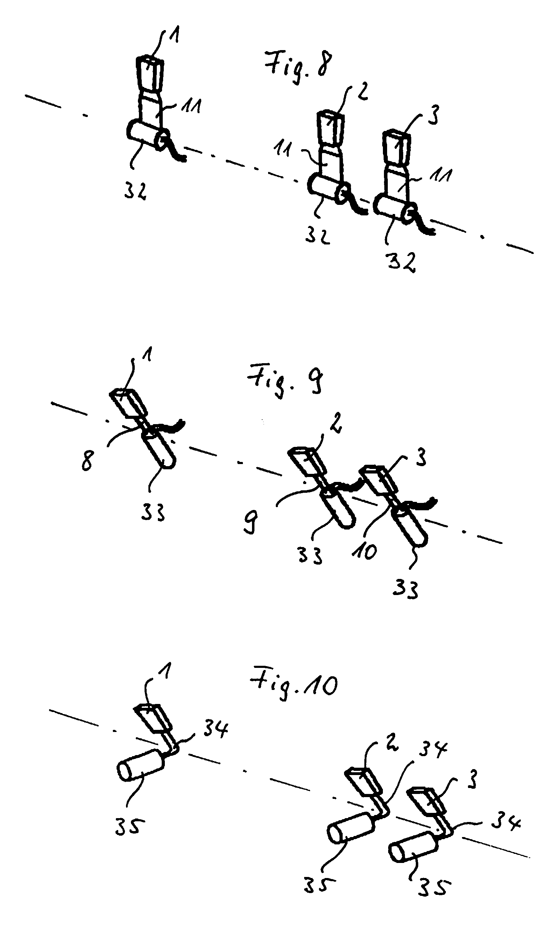

Ein Ausführungsbeispiel der zentralen Welle 4 mit angeflanschtem Drehantrieb ist in den Figuren 3 bis 7 im einzelnen dargestellt.

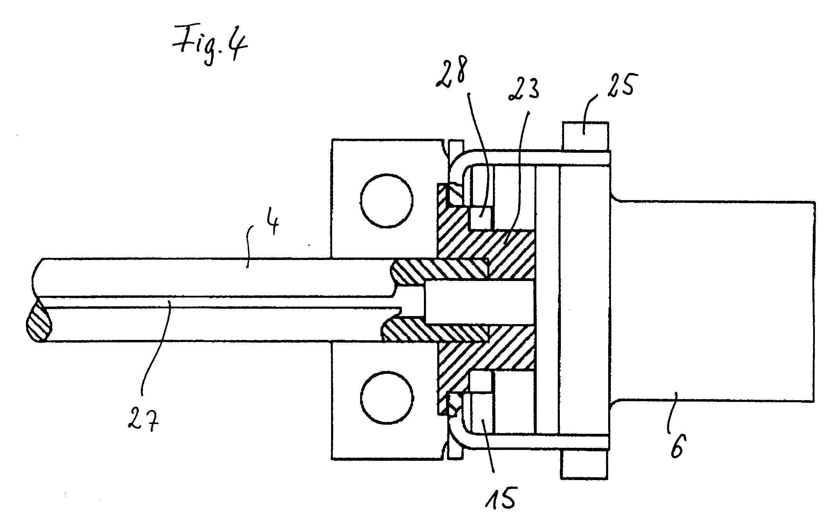

Mit der gemeinsamen Welle 4 sind Gurtbänder 11 fest verbunden. Über die Gurtbänder 11 sind die Verschlüsse 1, 2 und 3 an der Welle 4 verankert. Die Verankerungsstellen werden in einer mittleren Bohrung 12 der Welle 4 gewährleistet. Zur Verankerung dient ein insbesondere als gemeinsamer Riegel 13 ausgebildeter Stahlstift, welcher in die Bohrung 12 der Welle 4 eingeschoben ist. Um den Riegel 13 ist das Gurtband 11 geschlungen und das Gurtbandende außerhalb der Welle 4 bei einer Vernähung 26 mit dem zum jeweiligen Verschluß geführten Gurtband 11 verbunden. Das Gurtband 11 mit dem um den Riegel 13 geschlungenen Gurtbandende ragen durch einen Längsschlitz 27 (Fig. 4) der Welle 4. Der Durchmesser des als Riegel 13 wirkenden Stahlstiftes ist so bemessen, daß das umschlungene Gurtbandendstück fest in der mittleren Bohrung 12 der Welle 4 verankert ist.

An das eine Ende der Welle 4 ist der Drehantrieb 6 angeflanscht. An der Verbindungsstelle zwischen dem Drehantrieb 6 und der Welle 4 befindet sich ferner eine Sperrscheibe 23, welche drehfest mit der Welle 4 verbunden ist. Die Sperrscheibe 23 besitzt eine Verzahnung 28 (Fig. 5). In die Verzahnung 28 greift ständig aufgrund der Kraft einer Feder 16 eine Sperrklinke 15 ein. Das eingreifende Ende der Sperrklinke 15 und die Verzahnung 28 sind so geformt, daß eine Drehung der Welle in Richtung des Pfeiles 20 (Fig. 1) möglich ist. Diese Drehung, bei welcher die Verschlüsse 1, 2 und 3 in Richtung der Pfeile 19 in eine zurückgezogene Position gebracht werden, wird vom Drehantrieb 6 vermittelt. Eine Rückdrehung der Welle entgegengesetzt zum Pfeil 20 wird durch den Eingriff der Sperrklinke 15 in die Verzahnung 28 verhindert. Die Sperrscheibe 23 und die Klinke 15 wirken somit als Rücklaufsperre. Zwischen dieser Rücklaufsperre und den jeweiligen Verankerungsstellen der Gurtbänder 11 an der Welle 4 können Kraftbegrenzer 29 (Energieabsorber) vorgesehen sein. Diese Energieabsorber können durch Materialverformung (z.B. Torsion) wirksam sein (Fig. 12). Beim dargestellten Ausführungsbeispiel der Fig. 3 sind an beiden Wellenenden Rücklaufsperren (Sperrscheiben 23 und Klinken 15) gebildet.

Für den Drehantrieb können beispielsweise ein bis zwei Umdrehungen der Welle 4 durchgeführt werden, so daß eine Rückzugsbewegung von 60 bis 80 mm erreicht werden kann.

Für den Antrieb der Welle 4 können auch an beiden Wellenenden Drehantriebe 6 vorgesehen sein.

Bei den dargestellten Ausführungsbeispielen ist die Welle 4 in einem Distanzrohr 21 geführt. Ferner befinden sich an der Welle 4 Gurtführungen 22, zwischen denen die jeweiligen Gurtbänder 21 beim Aufwickeln auf die Welle 4 geführt sind. Für die Welle 4 sind an den beiden Enden Drehlager 24 vorgesehen. Die Befestigung des Drehantriebes 6 erfolgt mit Hilfe einer Befestigungsschraube 25 (Fig. 4). Bei dem in der Fig. 8 dargestellten Ausführungsbeispiel sind jedem Verschluß 1, 2 und 3 separate Drehantriebe 32 als Strafferantriebe zugeordnet. Die Drehantriebe 32 wirken über die Gurtbänder 11 auf die Verschlüsse 1 bis 3. Für die Drehantriebe 32 eignet sich ein Drehantrieb, wie er beispielsweise in der DE 43 42 666 A1 beschrieben ist.

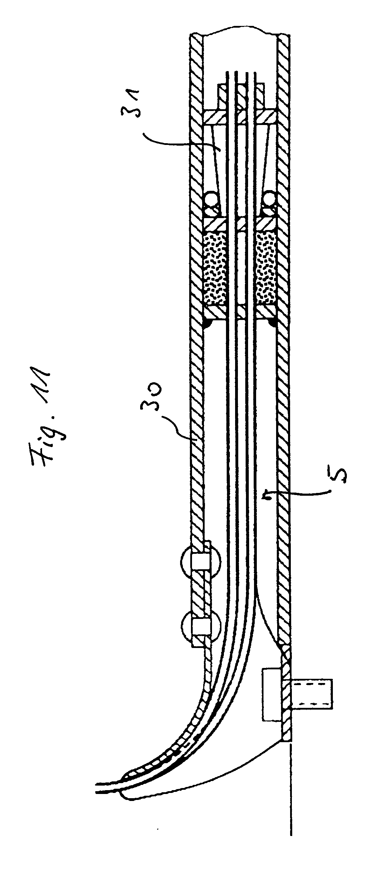

In der Fig. 9 ist ein weiteres Ausführungsbeispiel dargestellt, bei welchem die an der Rückbank eines Fahrzeugs angeordneten Verschlüsse 1 bis 3 ebenfalls von zugeordneten separaten Linearstrafferantrieben 33 angetrieben werden. Die Linearstrafferantriebe 33 wirken direkt über die Stahlseile 8, 9 und 10, welche gleichzeitig aus Halteeinrichtungen für die Verschlüsse 1 bis 3 dienen, auf die Verschlüsse. Geeignete Linearantriebe mit zugeordneten Halteeinrichtung insbesondere in Form von Stahlseilen sind in der deutschen Patentanmeldung 196 41 224.2 beschrieben.

In der Fig. 10 ist ein weiteres Ausführungsbeispiel für an einer Rückbank eines Kraftfahrzeugs angeordneten Verschlüssen 1 bis 3 dargestellt. Auch diese Verschlüsse sind mit Linearstrafferantrieben 35 jeweils verbunden. Die Linearstrafferantriebe 35 wirken über Seilumlenkungen 34 auf die Verschlüsse. Derartige Anordnungen sind beispielsweise aus der EP 0 599 810 B1 oder der EP 0 685 371 A1 bekannt.

## Patentansprüche

1. Vorrichtung zum Straffen mehrerer in einem Kraftfahrzeug angeordneter Sicherheitsgurte, die jeweils in einem Verschluß verriegelbar sind,
dadurch **gekennzeichnet,**
daß mehrere Verschlüsse (1,2,3), die in einer quer zur Fahrzeuglängsrichtung verlaufenden Reihe im Fahrzeug angeordnet sind, von wenigstens einem Strafferantrieb (6, 7; 32; 33; 35) in eine zurückgezogene Stellung bewegbar sind.

2. Vorrichtung nach Anspruch 1, dadurch gekennzeichnet, daß die mehreren Verschlüsse (1,2,3) durch wenigstens ein Strammelement (4, 5; 8 - 10), welches von dem wenigstens einen Strafferantrieb (6, 7; 32; 33; 35) antreibbar ist, in eine zurückgezogene Stellung bewegbar sind.

3. Vorrichtung nach Anspruch 1 oder 2, dadurch gekennzeichnet, daß die mehreren Verschlüsse (1,2,3) durch ein gemeinsames Strammelement (4,5) in eine zurückgezogene Stellung bewegbar sind.

4. Vorrichtung nach einem der Ansprüche 1 bis 3, dadurch gekennzeichnet, daß das wenigstens eine Strammelement (4; 5) sich quer zur Fahrzeuglängsrichtung erstreckt.

5. Vorrichtung nach einem der Ansprüche 1 bis 4, dadurch gekennzeichnet, daß das wenigstens eine Strammelement als Welle (4) ausgebildet ist, deren Antriebsdrehbewegung(en) auf die Verschlüsse (1, 2, 3) übertragbar ist bzw. sind.

6. Vorrichtung nach Anspruch 5, dadurch gekennzeichent, daß der jeweilige Verschluß (1, 2, 3) über ein Gurtband (11), das auf die Welle (4) aufwickelbar ist, mit der Welle (4) verbunden ist.

7. Vorrichtung nach Anspruch 6, dadurch gekennzeichnet, daß das Gurtband (11) an der Welle (4) verankert ist.

8. Vorrichtung nach Anspruch 7, dadurch gekennzeichnet, daß die Welle (4) eine mittlere Bohrung (12) aufweist, in welcher das jeweilige Gurtband (11) mittels eines Riegels (13) verankert ist.

9. Vorrichtung nach Anspruch 8, dadurch gekennzeichnet, daß ein gemeinsamer Riegel (13) für alle Gurtbänder (11) vorgesehen ist.

10. Vorrichtung nach Anspruch 1 oder 2, dadurch gekennzeichnet, daß das jeweilige Strammelement als Zugmittel (5) ausgebildet ist und über jeweils umgelenkte Verbindungsmittel (8, 9, 10) an den Verschlüssen (1, 2, 3) angreift.

11. Vorrichtung nach einem der Ansprüche 1 bis 10, dadurch gekennzeichnet, daß das Strammelement (4; 5) am Boden (14) der Fahrzeugkarosserie gelagert ist.

12. Vorrichtung nach einem der Ansprüche 1 bis 11, dadurch gekennzeichnet, daß am jeweiligen Strammelement (4; 5) eine Rücklaufsperre (15, 16) wirksam ist.

13. Vorrichtung nach einem der Ansprüche 1 bis 12, dadurch gekennzeichnet, daß die Verschlüsse (1, 2, 3) an einer Rückbank (17) des Kraftfahrzeugs vorgesehen sind.

14. Vorrichtung nach einem der Ansprüche 1 bis 13, dadurch gekennzeichnet, daß die Verschlüsse (1,2,3) gleichzeitig in die zurückgezogene Stellung bewegbar sind.
